# EUROPÄISCHE PATENTANMELDUNG

(11) **EP 0 849 891 A2**
(43) Veröffentlichungstag der Anmeldung: **24.06.1998**
(21) Anmeldenummer: 97121333.5
(22) Anmeldetag: 04.12.1997
(51) Int. Cl.: H04B 7/26

(54) **Verfahren und Anordnung zum Aufbau einer Nutzkanalverbindung in einem Mobilfunknetz**

(30) Priorität: 20.12.1996 DE 19653468
(71) Anmelder: SIEMENS AKTIENGESELLSCHAFT, 80333 München (DE)
(72) Erfinder: Emmer, Dieter, 82110 Germering (DE); Koch, Michael, 80809 München (DE); Michels, Bernard, 85221 Dachau (DE)

(57) **Zusammenfassung**

Beschrieben wird ein Verfahren zum Aufbau einer Nutzkanalverbindung zwischen einer Ursprungs-Mobilstation (MS1) und einer Ziel-Mobilstation (MS2) eines aus mindestens zwei Basisstationen (BTS1, BTS2), einer diese steuernden Basisstationssteuereinheit (BSC1) und einer mit dieser über eine Transcodier- und Ratenanpassungseinheit (TRAU) verbundenen Mobilvermittlungseinrichtung (MSC) bestehenden Mobilfunknetzes (PLMN). Ein Verbindungswunsch von der Ursprungs-Mobilstation (MS1) zu der Ziel-Mobilstation (MS2) der Mobilvermittlungseinrichtung (MSC) wird durch Signalisierung gemeldet. Mit Hilfe einer Datenbasis (DB, HLR) ermittelt, über welche Basisstation (BTS2) die gewünschte Ziel-Mobilstation (MS2) erreichbar ist. Die Transcodier- und Ratenanpassungseinheit (TRAU) enthält ein Schaltmittel (SW) zum Nutzkanalverbindungsaufbau, die eine Nutzkanalverbindung zwischen der Ursprungs-Mobilstation (MS1) und der Ziel-Mobilstation (MS2) schaltet.

## Beschreibung

Die Erfindung betrifft ein Verfahren zum Aufbau einer Nutzkanalverbindung zwischen Mobilstationen eines Mobilfunknetzes mit Funkbasisstationen, einer diese steuernden Funkbasisstationssteuereinheit und einer mit dieser über eine Transcodier- und Ratenanpassungseinheit physikalisch verbundenen Mobilvermittlungseinrichtung. Außerdem betrifft die Erfindung Anordnungen zur Durchführung des Verfahrens.

Mobilfunknetze, in denen die Erfindung zur Anwendung kommt, sind bekannt und werden meist gemäß der ETSI-Recommandation GSM spezifiziert. GSM wird derzeit als Abkürzung für den englischsprachigen Ausdruck "Global System for Mobil Communications" verwendet und es existieren drei Grundprinzipien, das sogenannte GSM900, dessen Funksystem mit einer Trägerfrequenz im Bereich von 900 MHz arbeitet, das sogenannte DCS1800, dessen Funksystem mit einer Trägerfrequenz im Bereich von 1,8 GHz arbeitet, und das System PCS 1900, das mit einer Trägerfrequenz von 1,9 GHz arbeitet.

Das GSM-Netz ist hierarchisch in mehrere Subsysteme gegliedert, nämlich ein Radio-Subsystem RSS, ein Netzvermittlungssubsystem NSS (Network Switching Subsystem) und ein Betriebs- und Instandhaltungssubsystem OMS (Operation and Maintenance Subsystem).

Das Radiosubsystem RSS enthält die Mobiltelefone, die auch Mobilstationen MS genannt werden und über Funk jeweils mit der nächstgelegenen Basisstation, die auch Base Transceiver Station BTS genannt wird, kommunizieren. Die Basisstationen sind Teil des Basisstationssubsystems, innerhalb dem sie über sogenannte Abis-Schnittstellen zu Basisstationssteuereinheiten BSC (Base Station Controller) Nutzkanalverbindungen und Signalisierungskanalverbindungen unterhalten können und von diesen Basisstationssteuereinheiten gesteuert werden. Die Basisstationssteuereinheiten können über Transcodier- und Ratenanpassungseinheiten TRAU durch Nutzkanäle und Signalisierungskanäle mit dem Netzvermittlungssubsystem verbunden sein, insbesondere mit Mobilvermittlungseinrichtungen des Netzvermittlungssubsystems, die auch als Mobile Switching Center MSC bezeichnet werden. Die Schnittstelle zwischen dem Basisstationssubsystem BSS und dem Netzvermittlungssubsystem NSS wird mit A-Schnittstelle bezeichnet. Das Netzvermittlungssubsystem NSS enthält neben mindestens einer Mobilvermittlungseinrichtung noch ein Datenbanksystem als Datenbasis, um die anfallenden Vermittlungs- und Verwaltungsaufgaben ausführen zu können. Wichtige Register dieses Datenbanksystems sind beispielsweise das Heimatbereichsregister, auch Home Location Register HLR genannt, in dem die persönlichen Teilnehmerinformationen, wie z.B. die Telefonnummer, die für den Teilnehmer freigeschalteten Dienste, der Heimatbereich, dem er zugeordnet ist und sein momentaner Aufenthaltsort, gespeichert sind. Außerdem gibt es ein Besucherbereichsregister, auch Visiter Location Register VLR genannt, das die dynamischen Teilnehmerdaten enthält. Dieses Register kommt enthält lokale, dem Gebiet zugeordnete Datenbanken. In diesen Datenbanken werden Kopien der Heimatbereichsregister für die Benutzer geführt, die sich momentan in dem Zuständigkeitsbereich eines solches Besucherbereichsregisters VLR befinden. Darüber hinaus enthält das Datenbanksystem des Netzvermittlungssubsystems ein Berechtigungssentrum, auch Authentication Center AUC genannt, das die Zugangsdaten der einzelnen Teilnehmer enthält, insbesondere den einem Teilnehmer persönlich zugeordneten, geheimen SIM-Karten-Schlüssel, der zum Zugang des Teilnehmers zum Mobilfunknetz sowie für die codierte Übertragung der Gesprächsdaten über das Netz erforderlich ist. Darüber hinaus gibt es auch eine Gerätedatenbank mit endgerätespezifischen Daten, die auch mit Equipment Identity Register EIR bezeichnet wird.

Wenn ein Teilnehmer von einer in einem Mobilfunknetz der vorstehend genannten Art eingebuchten Mobilstation einen Verbindungswunsch zu einer anderen Mobilstation dieses Mobilfunknetzes absendet, wird dieser Verbindungswunsch über die Basisstation BTS, in deren Funkbereich er sich befindet, über die diese Basisstation BTS steuernde Basisstationssteuereinheit BSC und über die dieser Basisstationssteuereinheit BSC zugeordnete Transcodier- und Ratenanpassungseinheit TRAU zu einer dieser Transcodier- und Ratenanpassungseinheit Zugeordneten Mobilvermittlungseinrichtung MSC per Signalisierung gemeldet. Die Mobilvermittlungseinrichtung ermittelt mit Hilfe einer Datenbasis, hier mit Hilfe des Heimatbereichsregisters HLR, über welche Basisstation die Mobilstation, zu der ein Verbindungswunsch angemeldet worden ist, erreichbar ist. Nach einem Authentisierungsvorgang zwischen Mobilvermittlungseinrichtung und Ziel-Mobilstation veranlaßt die Mobilvermittlungseinrichtung des Netzvermittlungssubsystems das Durchschalten einer Nutzkanalverbindung zwischen den beiden Mobilstationen. Diese Nutzkanalverbindung wird von der den Verbindungswunsch abgebenden Ursprungsmobilstation über die dieser Ursprungsmobilstation nächstgelegene Basisstation, über die dieser Basisstation zugeordnete Basisstationssteuereinheit, über eine Transcodier- und Ratenanpassungseinheit, über ein Schaltmittel in der Mobilvermittlungseinrichtung, über eine Transcodier- und Ratenanpassungseinheit, über eine Basisstationssteuereinheit und über eine der Ziel-Mobilstation nächstgelegene Basisstation geführt. Hierbei werden Nutzkanalverbindungen für ein sehr großes Gebiet mit einer sehr großen Zahl von Mobilstationen immer über eine einzige Mobilvermittlungseinrichtung geschaltet.

Da ein großer Anteil von Verbindungen zwischen Mobilstationen eines Mobilfunknetzes innerhalb eines räumlich begrenzten Bereiches benötigt werden und hierbei jede Nutzkanalverbindung eine Kanalbandbreite von einem Element des Basisstationssubsystems zur Mobilvermittlungseinrichtung und eine ebensolche von der Mobilvermittlungseinrichtung zu diesem Element des Basisstationssubsystems benötigt, wird das Übertragungsleitungsnetz zwischen diesen Basisstationssubsystemelementen und der Mobilvermittlungseinrichtung stark belastet.

Aufgabe der vorliegenden Erfindung ist es daher, ein Verfahren zum Aufbau einer Nutzkanalverbindung zwischen zwei Mobilstationen eines Mobilfunknetzes anzugeben, das das leitungsgebundene Übertragungsnetz eines Mobilfunknetzes weniger stark belastet. Außerdem ist es Aufgabe der Erfindung, Netzkomponenten eines Mobilfunknetzes anzugeben, die die Durchführung eines solchen Verfahrens ermöglichen.

Die Erfindung geht aus von einem Verfahren zum Aufbau einer Nutzkanalverbindung zwischen einer Ursprungsmobilstation und einer Ziel-Mobilstation eines aus mindestens zwei Basisstationen, einer diese steuernden Basisstationssteuereinheit und einer mit dieser über eine Transcodier- und Ratenanpassungseinheit physikalisch verbundenen Mobilvermittlungseinrichtung bestehenden Mobilfunknetzes. Bei einem solchen Verfahren wird ein Verbindungswunsch von der Ursprungsmobilstation per Signalisierung an die Mobilvermittlungseinrichtung gemeldet und die Mobilvermittlungseinrichtung ermittelt mit Hilfe einer Datenbasis, über welche Funkbasisstation die gewünschte Ziel-Mobilstation erreichbar ist. Erfindungsgemäß hat die Transcodier- und Ratenanpassungseinheit ein Schaltmittel zum Nutzkanalverbindungsaufbau und schaltet eine Nutzkanalverbindung zwischen der Ursprungsmobilstation und der Ziel-Mobilstation.

Das Verlagern des Schaltmittels zum Schalten der Nutzkanalverbindung in den Bereich der Transcodier- und Ratenanpassungseinheit spart eine Nutzkanalverbindung von der Transcodier- und Ratenanpassungseinheit bis zu dem Schaltmittel der Mobilvermittlungseinrichtung und von dieser zurück bis zur Transcodier- und Ratenanpassungseinheit. Andererseits stellt die Mobilvermittlungseinrichtung alle für eine Gebührenerfassung erforderlichen Informationen über den Zustand einer Nutzkanalverbindung bereit. Zur Authentifizierung der Mobilstationen und zur Lokalisierung der Mobilstationen durch die Mobilvermittlungseinrichtung werden lediglich schmalbandige Signalisierungskanalverbindungen zwischen der Basisstationssteuereineinheit BSC und der Mobilvermittlungseinrichtung benötigt. Die Signalisierungsmechanismen zwischen der Transcodier- und Basissteuereinheit BSC und der Mobilvermittlungseinrichtung stellen sicher, daß bei Funkbereichswechsel einer Mobilstation, zu der eine Nutzkanalverbindung besteht, die erforderlichen Übergabemechanismen zum Übergeben einer Nutzkanalverbindung an andere Basisstationen, gegebenenfalls andere Basisstationssteuereinheiten und gegebenenfalls eine andere Transcodier- und Ratenanpassungseinheit durchgeführt werden.

Daher wird vorzugsweise die Transcodier- und Ratenanpassungseinheit durch die Mobilvermittlungseinrichtung veranlaßt, eine Nutzkanalverbindung zwischen der Ursprungsmobilstation und der Ziel-Mobilstation zu schalten.

Eine Ausgestaltungsform eines erfindungsgemäßen Verfahrens sieht vor, daß die Transcodier- und Ratenanpassungseinheit dann eine Nutzkanalverbindung zwischen der Ursprungsmobilstation und der Ziel-Mobilstation schaltet, wenn die Mobilvermittlungseinrichtung ermittelt, daß die Ziel-Mobilstation über dieselbe Transcodier- und Ratenanpassungseinheit erreichbar ist wie die Ursprungsmobilstation.

Hierzu wird in einer solchen Transcodier- und Ratenanpassungseinheit bzw. angekoppelt an eine solche ein Schaltmittel wie z.B. ein Koppelfeld benötigt, das zu an die Transcodier- und Ratenanpassungseinheit angeschlossenen Basisstationsssteuereinheiten gehende Nutzkanalverbindungen verbinden kann. Solange die Ursprungsmobilstation und die Ziel-Mobilstation über dieselbe Basisstation kommunizieren oder über zwei Basisstationen, die von derselben Basisstationssteuereinheit gesteuert werden oder über zwei Basisstationen, die über unterschiedliche Basisstationssteuereinheiten gesteuert werden, die wiederum an derselben Transcodier- und Ratenanpassungseinheit angeschlossen sind, wird hierbei die Nutzkanalverbindung unter Wahrung aller Mobilitätsfunktionen über die Transcodier- und Ratenanpassungseinheit geschaltet. Falls eine der Mobilstationen durch Ortsveränderung in den Bereich einer Basisstation wechselt, die zur Mobilvermittlungseinrichtung über eine andere Transcodier- und Ratenanpassungseinheit zu verbinden ist, wird die Nutzkanalverbindung bei einer Transcodier- und Ratenanpassungseinheit gemäß dem beschriebenen Ausführungsbeispiel über die Mobilvermittlungseinrichtung durchgeschaltet.

Eine bevorzugte Ausgestaltungsform eines erfindinngsgemäßen Basisstationssubsystems mit mindestens zwei Basisstationen, mindestens zwei je mindestens eine Basisstation steuernden Basisstationssteuereinheiten und mindestens zwei je mindestens eine Basisstationssteuereinheit mit einer Mobilvermittlungseinrichtung verbindenden Transcodier- und Ratenanpassungseinheiten sieht ein Schaltmittel vor, das beiden Transcodier- und Ratenanpassungseinheit zugeordnet sind, um eine Nutzkanalverbindung über eine zwischen diesen Transcodier- und Ratenanpassungseinheit bestehende Verbindung und über je eine Basisstationssteuereinheit zu vermitteln. Ein solches Schaltmittel kann beispielsweise aus je einem Koppelfeld bestehen, das einer Transcodier- und Ratenanpassungseinheit zugeordnet ist und von der Transcodier- und Ratenanpassungseinheit zu Basisstationssteuereinheiten gehende Nutzkanäle mit zu anderen Transcodier- und Ratenanpassungseinheiten gehenden Nutzkanälen zusammenschalten kann.

Ein solches Basisstationssubsystem ermöglicht das Schalten eines Nutzkanals von einer Mobilstation über eine Basisstation, eine Basisstationssteuereinheit, eine Transcodier- und Ratenanpassungseinheit, eine weitere Transcodier- und Ratenanpassungseinheit, eine weitere Basisstationssteuereinheit und eine weitere Basisstation zu einer weiteren Mobilstation.

Vorzugsweise ist das genannte Schaltmittel einer Transcodier- und Ratenanpassungseinheit derart ausgestaltet, daß es sowohl von der Transcodier- und Ratenanpassungseinheit, der es zugeordnet ist, zu Basisstationssteuereinheiten gehende Nutzkanäle durchschalten kann, als auch Nutzkanäle zwischen Transcodier- und Ratenanpassungseinheiten.

Wenn es vorstehend heißt, daß ein Schaltmittel einer Transcodier- und Ratenanpassungseinheit zugeordnet ist, so bedeutet dies, daß die Transcodier- und Ratenanpassungseinheit um dieses Schaltmittel erweitert worden ist, sich also um dieses Schaltmittel von einer bekannten Transcodier- und Ratenanpassungseinheit unterscheidet.

In einem Mobilfunknetz mit einem vorstehend beschriebenen Basisstationssubsystem sieht eine besonders günstige Ausgestaltungsform eines erfindungsgemäßen Verfahrens zum Aufbau einer Nutzkanalverbindung vor, daß die Mobilvermittlungseinrichtung das Schalten einer Nutzkanalverbindung zwischen der Ursprungsmobilstation und der Ziel-Mobilstation unter Einbeziehung der Nutzkanalverbindung zwischen einer ersten und einer zweiten Transcodier- und Ratenanpassungseinheit veranlaßt, falls sie ermittelt, daß die Ursprungsmobilstation von der Mobilvermittlungseinrichtung über eine erste Transcodier- und Ratenanpassungseinheit erreichbar ist, außerdem, daß die Ziel-Mobilstation von der Mobilvermittlungseinrichtung über eine zweite Transcodier- und Ratenanpassungseinheit erreichbar ist und daß außerdem eine Nutzkanalverbindung zwischen der ersten und der zweiten Transcodier- und Ratenanpassungseinheit schaltbar ist.

Demnach ist das Datenbanksystem, auf das die Mobilvermittlungseinrichtung zum Ermitteln des Leitweges einer Nutzkanalverbindung zurückgreift, derart zu erweitern, daß die Mobilvermittlungseinrichtung erkennen kann, ob zwischen zwei Transcodier- und Ratenanpassungseinheiten, die im Leitweg einer Nutzkanalverbindung liegen, unmittelbar eine Nutzkanalverbindung schaltbar ist.

Nachstehend wird die Erfindung mit Hilfe der in den Figuren dargestellten Ausführungsbeispiele näher erläutert.
Fig. 1 zeigt als Prinzipschaubild die Hauptkomponenten eines Mobilfunknetzes mit einer erfindungsgemäßen Transcodier- und Ratenanpassungseinheit, und
Fig. 2 zeigt als Prinzipschaubild die Hauptkomponenten eines Mobilfunknetzes mit einem erfindungsgemäßen Basisstationssubsystem und erfindungsgemäßen Transcodier- und Ratenanpassungseinheiten.

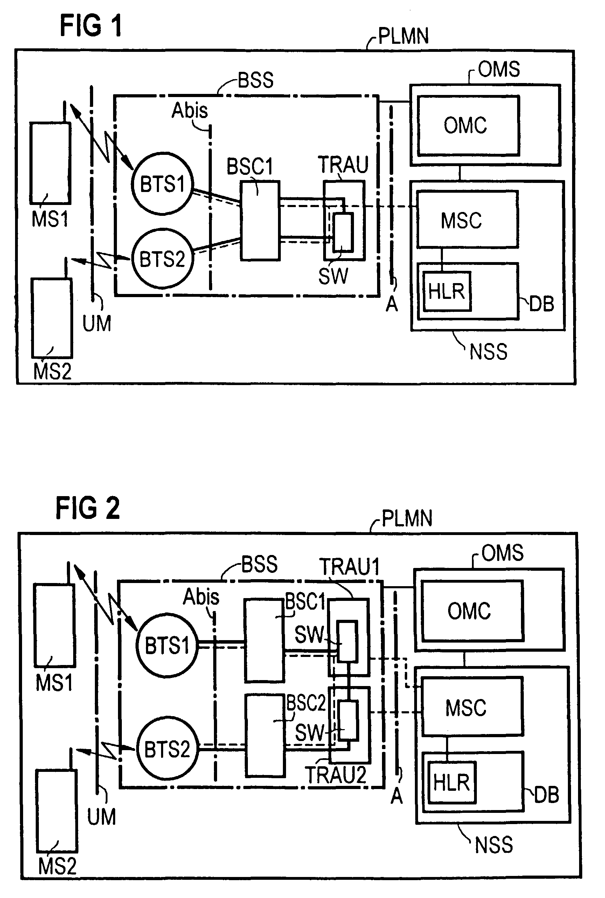

Die Fig. 1 zeigt als ein mögliches Ausführungsbeispiel ein öffentliches landgestütztes Mobilfunknetz PLMN mit zwei Mobilstationen MS1, MS2, die über eine Luftschnittstelle UM mit Basisstationen BTS1, BTS2 eines Basisstationssubsystemes BSS kommunizieren, mit einem Verbindungsnetzsubsystem NSS, das mit dem Basisstationssubsystem BSS über eine Schnittstelle A verbunden ist und mit einem Betriebs- und Instandhaltungssubsystem OMS, das sowohl auf das Verbindungsnetzsubsystem NSS als auch auf das Basisstationssubsystem BSS einwirkt. Im Betriebs- und Instandhaltungssubsystem OMS ist beispielhaft ein Betriebs- und Instandhaltungszentrum OMC dargestellt, das innerhalb des Betriebs- und Instandhaltungssubsystems OMS die Überwachungsmaßnahmen fernsteuert.

Die Basisstationen BTS1, BTS2 kommunizieren über eine Schnittstelle Abis mit einer Basisstationsteuereinheit BSC1, die ihrerseits über eine Transcodier- und Ratenanpassungseinheit TRAU und die genannte Schnittstelle A mit einer Mobilvermittlungseinrichtung MSC des Verbindungsnetzsubsystems NSS in Verbindung steht. Das Verbindungsnetzsubsystem NSS enthält neben der dargestellten Mobilvermittlungseinrichtung MSC noch ein Datenbanksystem DB als Datenbasis, von deren Register in der Figur gemäß Fig. 1 beispielhaft das Heimatbereichsregister HLR dargestellt ist.

Das prinzipielle Zusammenspiel der genannten Komponenten des Mobilfunknetzes PLMN ist, soweit nicht bereits in der Einleitung erläutert, allgemein bekannt und braucht hier nicht näher erläutert zu werden.

Wird in dem Ausführungsbeispiel gemäß Fig. 1 von der Mobilstation MS1 als Ursprungsmobilstation eine Verbindung zur Mobilstation MS2 als Ziel-Mobilstation aufgebaut, so werden zunächst Meldungen über einen Signalisierungskanal von der Mobilstation MS1 über die Basisstation BTS1, die Basisstationssteuereinheit BSC1 und die Transcodier- und Ratenanpassungseinheit TRAU zur Mobilvermittlungseinrichtung MSC übertragen. Die Mobilvermittlungseinrichtung MSC überprüft die Zugriffsberechtigung der Mobilstation MS1 auf das Mobilfunknetz PLMN und ermittelt anhand des Heimatbereichsregisters HLR den aktuellen Aufenthaltsort der Ziel-Mobilstation MS2. Dann wird durch Meldungsaustausch über einen Signalisierungskanal zwischen der Mobilvermittlungseinrichtung MSC und der Mobilstation MS2 über die Transcodier- und Ratenanpassungseinheit TRAU, die Basisstationssteuereinheit BSC1 und die Basisstation BTS2 die Zugriffsberechtigung der Mobilstation MS2 überprüft und die Mobilvermittlungseinrichtung MSC veranlaßt daraufhin das Durchschalten einer Nutzkanalverbindung von der Ursprungsmobilstation MS1 zur Ziel-Mobilstation MS2. Zur besseren Verdeutlichung sind die Signalisierungskanalverbindungen zwischen den Basisstationen BTS1 und BTS2 und der Mobilvermittlungseinrichtung MSC durch unterbrochene Linien dargestellt.

Erfindungsgemäß enthält die Transcodier- und Ratenanpassungseinheit TRAU gemäß dem Ausführungsbeispiel der Fig. 1 ein Schaltmittel SW zum Durchschalten der beiden von den Basisstationen BTS1 und BTS2 über die Basisstationssteuereinheit BSC1 kommenden Nutzkanalverbindungen, die in der Figur durch fette Vollinien dargestellt sind.

Das Mobilfunknetz PLMN gemäß dem Ausführungsbeispiel der Fig. 2 unterscheidet sich von dem Mobilfunknetz PLMN gemäß dem Ausführungsbeispiel der Fig. 1 dadurch, daß die Basisstation BTS1 über eine erste Basisstationssteuereinheit BSC1 und eine erste Transcodier- und Ratenanpassungseinheit mit der Mobilvermittlungseinrichtung MSC verbindbar ist und die Basisstation BTS2 über eine zweite Basisstationssteuereinheit BSC2 und eine zweite Transcodier- und Ratenanpassungseinheit TRAU2 mit der Mobilvermittlungseinrichtung MSC verbindbar ist. Außerdem sind die Schaltmittel SW in den Transcodier- und Ratenanpassungseinheiten TRAU1 und TRAU2 nicht nur geeignet, um zu Basisstationssteuereinheiten BSC1, BSC2 gehende Nutzkanalverbindungen durchzuschalten, sondern auch, um zwischen den beiden Transcodier- und Ratenanpassungseinheiten TRAU1 und TRAU2 eine Nutzkanalverbindung durchzuschalten.

Im Ausführungsbeispiel gemäß Fig. 2 läuft die Signalisierung zwischen der Mobilstation MS1 und der Mobilvermittlungseinrichtung MSC sowie der Mobilstation MS2 und der Mobilvermittlungseinrichtung MSC bei einem Verbindungsaufbau von der Mobilstation MS1 als Ursprungsmobilstation zur Mobilstation MS2 als Ziel-Mobilstation in analoger Weise ab, wie im Ausführungsbeispiel gemäß Fig. 1. Um geeignete Meldungen zum Veranlassen des Aufbaues einer Nutzkanalverbindung zwischen der Ursprungsmobilstation MS1 und der Ziel-Mobilstation MS2 abgeben zu können, überprüft die Mobilvermittlungseinrichtung MSC, nachdem sie im Heimatbereichsregister HLR den aktuellen Aufenthaltsort der Ziel-Mobilstation MS2 ermittelt hat, bzw. die Basisstation BTS2 ermittelt hat, über die die Ziel-Mobilstation MS2 erreichbar ist, ob die Ursprungsmobilstation MS1 und die Ziel-Mobilstation über dieselbe Transcodier- und Ratenanpassungseinheit TRAU1 erreichbar sind oder, falls nicht, ob zwischen den beiden Transcodier- und Ratenanpassungseinheiten TRAU1 und TRAU2, über die die Ursprungsmobilstation und die Ziel-Mobilstation MS1 und MS2 erreichbar sind, eine Nutzkanalverbindung durchschaltbar ist.

Im Ausführungsbeispiel gemäß Fig. 2 ist zwischen den beiden Transcodier- und Ratenanpassungseinheiten mit Hilfe der Schaltmittel SW eine Nutzkanalverbindung durchschaltbar, so daß die Mobilvermittlungseinrichtung MSC an die beiden Transcodier- und Ratenanpassungseinheiten TRAU1 und TRAU2 eine Meldung zum Durchschalten einer Nutzkanalverbindung zwischen den beiden Mobilstationen MS1 und MS2 abgibt.

Selbstverständlich ist die Topologie eines Mobilfunknetzes, in dem ein erfindungsgemäßes Verfahren ablaufen kann, nicht auf die beiden beschriebenen Ausführungsbeispiele beschränkt, sondern kann beispielsweise Komponenten beider Beispiele in Kombination enthalten.

So kann erfindungsgemäß beispielsweise auch eine Verbindung von einer Mobilstation über eine erste Basisstation, eine diese steuernde Basisstationssteuereinheit, eine erfindungsgemäße Transcodier- und Ratenanpassungseinheit, eine zweite Basisstationssteuereinheit und eine zweite Basisstation zu einer zweiten Mobilstation aufgebaut werden.

Selbstverständlich kann auch eine Nutzkanalverbindung zwischen zwei an derselben Basisstation im Basisstationssubsystem BSS einkoppelnden Mobilstationen mit Hilfe einer in der diesen Basisstationen nachgeordneten Transcodier- und Ratenanpassungseinheit TRAU durchgeschaltet werden.

In Abweichung zu der Netztopologie gemäß dem Ausführungsbeispiel von Fig. 2 können die beiden Transcodier- und Ratenanpassungseinheiten TRAU1 und TRAU2 auch mit unterschiedlichen Mobilvermittlungseinrichtungen MSC des Verbindungsnetzsubsystems NSS verbunden sein und trotzdem eine Nutzkanalverbindung unter Umgehung der Mobilvermittlungseinrichtungen schalten.

## Patentansprüche

1. Verfahren zum Aufbau einer Nutzkanalverbindung zwischen einer Ursprungs-Mobilstation (MS1) und einer Ziel-Mobilstation (MS2) eines aus mindestens zwei Basisstationen (BTS1, BTS2), einer diese steuernden Basisstationssteuereinheit (BSC1) und einer mit dieser über eine Transcodier- und Ratenanpassungseinheit (TRAU) physikalisch verbundenen Mobilvermittlungseinrichtung (MSC) bestehenden Mobilfunknetzes (PLMN), wobei ein Verbindungswunsch von der Ursprungs-Mobilstation (MS1) zu der Ziel-Mobilstation (MS2) der Mobilvermittlungseinrichtung (MSC) per Signalisierung gemeldet wird und die Mobilvermittlungseinrichtung (MSC) mit Hilfe einer Datenbasis (DB, HLR) ermittelt, über welche Basisstation (BTS2) die gewünschte Ziel-Mobilstation (MS2) erreichbar ist, dadurch **gekennzeichnet,** daß die Transcodier- und Ratenanpassungseinheit (TRAU) ein Schaltmittel (SW) zum Nutzkanalverbindungsaufbau hat, und eine Nutzkanalverbindung zwischen der Ursprungs-Mobilstation (MS1) und der Ziel-Mobilstation (MS2) schaltet.

2. Verfahren nach Anspruch 1, dadurch **gekennzeichnet**, daß die Mobilvermittlungseinrichtung (MSC) die Transcodier- und Ratenanpassungseinheit (TRAU) veranlaßt, eine Nutzkanalverbindung zwischen der Ursprungs-Mobilstation (MS1) und der Ziel-Mobilstation (MS2) zu schalten.

3. Verfahren nach einem der vorhergehenden Ansprüche, wobei die Transcodier- und Ratenanpassungseinheit (TRAU) eine Nutzkanalverbindung zwischen der Ursprungs-Mobilstation (MS1) und der Ziel-Mobilstation (MS2) schaltet, falls die Mobilvermittlungseinrichtung (MSC) ermittelt, daß die Ziel-Mobilstation (MS2) über die selbe Transcodier- und Ratenanpassungseinheit (TRAU) von der Mobilvermittlungseinrichtung (MSC) erreichbar ist wie die Ursprungs-Mobilstation (MS1).

4. Verfahren nach einem der vorherigen Ansprüche, wobei die Mobilvermittlungseinrichtung (MSC), das Schalten einer Nutzkanalverbindung zwischen der Ursprungs-Mobilstation (MS1) und der Ziel-Mobilstation (MS2) unter Einbeziehen der Nutzkanalverbindung zwischen der ersten und der zweiten Transcodier- und Ratenanpassungseinheit (TRAU1, TRAU2) veranlaßt, falls sie ermittelt, daß die Ursprungs-Mobilstation (MS1) von der Mobilvermittlungseinrichtung (MSC) über eine erste Transcodier- und Ratenanpassungseinheit (TRAU1) erreichbar ist, daß die Ziel-Mobilstation (MS2) von der Mobilvermittlungseinrichtung (MSC) über eine zweite Transcodier- und Ratenanpassungseinheit (TRAU2) erreichbar ist, und daß eine Nutzkanalverbindung zwischen der ersten und der zweiten Transcodier- und Ratenanpassungseinheit (TRAU1, TRAU2) schaltbar ist.

5. Transcodier- und Ratenanpassungseinheit (TRAU) für ein aus Basisstationen (BTS1, BTS2), einer diese steuernden Basisstationssteuereinheit (BSC1) und einer mit dieser über die Transcodier- und Ratenanpassungseinheit (TRAU) physikalisch verbundenen Mobilvermittlungseinrichtung (MSC) bestehendes Mobilfunknetz (PLMN), zum Komprimieren und Dekomprimieren von zwischen der Mobilvermittlungseinrichtung (MSC) und mindestens einer Basisstationssteuereinheit (BSC1) zu übertragenden Nutzkanaldaten, gekennzeichnet durch ein Schaltmittel (SW) zum Vermitteln einer Nutzkanalverbindung zwischen Mobilstationen über mindestens eine mit der Transcodier- und Ratenanpassungseinheit (TRAU) verbundene Basisstationssteuereinheit (BSC1).

6. Basisstationssubsystem (BSS) für ein aus einem Verbindungsnetzsubsystem (NSS) mit Mobilvermittlungseinrichtung (MSC), dem Basisstationssubsystem (BSS) und einem Betriebs- und Instandhaltungssubsystem (OMS) bestehendes Mobilfunknetz (PLMN), mit mindestens zwei Basisstationen (BTS1, BTS2), mindestens zwei je mindestens eine Basisstation (BTS1, BTS2) steuernden Basisstationssteuereinheiten (BSC1, BSC2) und mindestens zwei je mindestens eine Basisstationssteuereinheit (BSC1, BSC2) mit der Mobilvermittlungseinrichtung (MSC) verbindenden Transcodier- und Ratenanpassungseinheiten (TRAU1, TRAU2), dadurch **gekennzeichnet,** daß das Basisstationssubsystem (BSS) mindestens zwei Transcodier- und Ratenanpassungseinheiten (TRAU1, TRAU2) zugeordnete Schaltmittel (SW) enthält, um eine Nutzkanalverbindung zwischen Mobilstationen über mindestens eine zwischen diesen Schaltmitteln (SW) bestehende Verbindung und über je eine Basisstationssteuereinheit (BSC1, BSC2) zu vermitteln.
